# EUROPÄISCHE PATENTANMELDUNG

(11) **EP 3 954 892 A2**
(43) Veröffentlichungstag der Anmeldung: **16.02.2022**
(21) Anmeldenummer: 21185491.4
(22) Anmeldetag: 14.07.2021
(51) Int. Cl.: F03D 1/06, F03D 7/02

(54) **ROTORBLATT FÜR EINE WINDENERGIEANLAGE, ROTOR FÜR EINE WINDENERGIEANLAGE, BAUWERK UND WINDENERGIEANLAGE**

(30) Priorität: 21.07.2020 DE 102020119164
(71) Anmelder: Wobben Properties GmbH, 26607 Aurich (DE)
(72) Erfinder: Knobbe Eschen, Henry, 28217 Bremen (DE); Stemberg, Jochen, 26607 Aurich (DE)
(74) Vertreter: Eisenführ Speiser

(57) **Zusammenfassung**

Die Erfindung betriff ein Rotorblatt (108) für einen Rotor (106), insbesondere einer Windenergieanlage (100), mit einer sich zwischen einem Wurzelbereich (124) und einer Rotorblattspitze (126) einstellenden Rotorblattlänge, einer sich zwischen einer Vorderkante (112) und einer stumpfen Hinterkante (114) einstellenden Rotorblatttiefe, einer sich zwischen einer Druckseite (122) und einer Saugseite (120) einstellenden Rotorblattdicke, einen sich auf der Saugseite (120) erstreckenden, saugseitigen Hinterkantenbereich und/oder einen sich auf der Druckseite (122) erstreckenden, druckseitigen Hinterkantenbereich, wobei sich der saugseitige Hinterkantenbereich und/oder der druckseitige Hinterkantenbereich ausgehend von der stumpfen Hinterkante (114) in Richtung der Vorderkante (112) mit einer Erstreckung von kleiner 30 %, insbesondere kleiner 20 %, der Profiltiefe erstreckt, und wobei der saugseitige Hinterkantenbereich und/oder der druckseitige Hinterkantenbereich mindestens einen Wirbelgenerator (200) aufweist.

## Beschreibung

Die Erfindung betrifft ein Rotorblatt für eine Windenergieanlage, einen Rotor für eine Windenergieanlage, ein Bauwerk und eine Windenergieanlage mit einem Rotor und/oder einem Bauwerk.

Windenergieanlagen weisen einen Rotor mit mindestens einem, zwei oder mehreren Rotorblättern, vorzugsweise drei Rotorblättern, auf und sind ausgebildet, um aus kinetischer Windenergie mechanische Rotationsenergie und aus dieser elektrische Energie zu erzeugen. Derartige Windenergieanlagen sind allgemein bekannt und umfassen in der Regel eine Gondel, an der der Rotor angeordnet ist, und einen Turm, auf dem die Gondel mit dem Rotor um eine im Wesentlichen vertikal ausgerichtete Achse drehbar angeordnet ist.

Windenergieanlagen sind in der Regel als sogenannte Horizontalachsen-Windenergieanlagen ausgebildet, die einen Rotor mit einer im Wesentlichen horizontalen Achse umfassen, dessen Rotorblätter sich in einer Ebene im Wesentlichen senkrecht zum Wind drehen. Derartige Horizontalachsen-Windenergieanlagen nutzen zur Wandlung der kinetischen Windenergie in die mechanische Rotationsenergie das aerodynamische Prinzip des Auftriebs. Hierbei bildet ein Profil eines Rotorblatts eine Saugseite und eine Druckseite aus, sodass bei Umströmung des Profils mit bewegter Luft auf der Saugseite gegenüber der Druckseite ein Unterdruck entsteht. Der daraus resultierende Druckunterschied zwischen der Druckseite und der Saugseite führt zu einem aerodynamischen Auftrieb. Der Auftrieb ist hierbei beispielsweise von einem Anstellwinkel der Rotorblätter abhängig.

Bekannte Rotorblätter sind dahingehend nachteilig, dass die anliegende Luftströmung, insbesondere an einer Saugseite, abreißt und sich ein sogenanntes "Totwassergebiet" mit einer abgelösten Strömung bildet. Insbesondere bei größeren Anstellwinkeln kann die Strömung nicht mehr glatt an einem Profil eines Rotorblatts anliegen und reißt ab. Das Totwassergebiet mindert den Auftrieb des Rotorblatts und bremst das Rotorblatt ab, indem es dessen Widerstand erhöht. Dadurch wird ein Wirkungsgrad des Rotors und somit auch ein Ertrag einer Windenergieanlage reduziert.

Zur Verbesserung der aerodynamischen Eigenschaften von Rotorblättern und zur Steigerung der Effizienz sind unterschiedliche Lösungen bekannt. Beispielsweise ist es bekannt Vortexgeneratoren in einem Bereich zwischen 10 % und 60 % der Profilsehnenlänge ausgehend von einer Nasenkante des Profils vorzusehen. Die Vortexgeneratoren dienen dazu, über einer Oberfläche des Rotortblattes lokale Regionen turbulenter Luftströmungen zu erzeugen, um eine Erhöhung der Resistenz gegen Strömungsablösungen zu bewirken. Hierzu verwirbeln Wirbelgeneratoren eine wandnahe Strömung am Rotorblatt, in dessen Folge sich der Impulsaustausch zwischen wandnahen und wandfernen Strömungsschichten stark erhöht und die Strömungsgeschwindigkeiten in der wandnahen Grenzschicht zunehmen. Hierbei wird durch die Vortexgeneratoren selbst Widerstand erzeugt, sodass der Ertrag der Windenergieanlage nicht oder nur geringfügig gesteigert werden kann. Nachteilig an dieser Anordnung der Vortexgeneratoren ist zudem, dass diese laute Geräusche erzeugen.

Es ist auch bekannt, Rotorblätter mit einer zumindest teilweisen stumpfen Hinterkante im Innenbereich zu verwenden. Derartige Rotorblätter sind insbesondere dahingehend nachteilig, dass im Bereich der stumpfen Hinterkante die Auftriebsleistung aufgrund der geringeren Blatttiefe reduziert ist und sich zudem in diesem Bereich Wirbel in Form einer sogenannten Kärmänschen Wirbelstraße bilden können, die einen erhöhten Luftwiderstand und eine erhöhte Geräuschemission zur Folge haben.

Ferner sind zur Reduktion des Widerstands Modifikationen von flachen Profil-Hinterkanten durch Aushöhlen oder durch die Einbringung von Ausschnitten oder Vertiefungen bekannt. In US 4,789,117, 1988 ist beispielsweise eine wellenförmige Hinterkante an stumpfen Körpern zur Widerstandsreduktion beschrieben. Derartige Modifikationen an einem Rotorblatt wären jedoch mit erheblichen strukturellen Problemen verbunden, insbesondere da im Bereich der Modifikation in der Regel lasttragendes Laminat verläuft.

Auch die Verwendung zusätzlicher Splitter-Platten, die ausgebildet sind, um eine alternierende Wirbelstraße hinter einem stumpfen Körper in zwei stationäre Wirbel aufzuteilen und dadurch den Widerstand zu reduzieren, sind bekannt. Eine zusätzliche Splitterplatte an einem Rotorblatt hat jedoch eine größere Rotorblatttiefe zur Folge, die sich negativ auf die Transportabmessungen auswirkt und durch die größere Rotorblatttiefe erhöhte Anlagenlasten verursacht.

Die existierenden Vorrichtungen zur Verbesserung der aerodynamischen Eigenschaften von Rotorblättern und Steigerung der Effizienz bieten verschiedene Vorteile, jedoch sind weitere Verbesserungen wünschenswert.

Windenergieanlagen können zudem standortabhängigen Rahmenbedingungen, wie zum Beispiel hinsichtlich eines nicht zu überschreitenden Schallpegels, unterliegen. Um den Schallpegel zu reduzieren, werden die Windenergieanlagen häufig in einem schallreduzierten Betriebsmodus regelmäßig mit einer reduzierten Nennrotordrehzahl gegenüber dem leistungsoptimierten Betriebsmodus betrieben.

Das Deutsche Patent- und Markenamt hat in der Prioritätsanmeldung zu vorliegender Anmeldung folgenden Stand der Technik recherchiert: WO 2016/ 055 076 A1, GB 2 526 847 A, EP 3 480 457 A1, EP 3 029 313 A1, DE 10 2018 103 678 A1, DE 10 2017 004 288 A1, DE 10 2011 012 965 A1, EP 3 309 388 A1, US 2018/0238298 A1, US 2014/0271213 A1, US 4789117 A.

Es ist daher eine Aufgabe der vorliegenden Erfindung, ein Rotorblatt für eine Windenergieanlage, einen Rotor für eine Windenergieanlage, ein Bauwerk und eine Windenergieanlage mit einem Rotor und/oder mit einem Bauwerk bereitzustellen, die einen oder mehrere der genannten Nachteile vermindern oder beseitigen. Es ist insbesondere eine Aufgabe der Erfindung, eine Lösung bereitzustellen, die Wirksamkeit eines Rotorblatts einer Windenergieanlage für eine hohe Anlagenwirtschaftlichkeit weiter zu steigern und gleichzeitig eine Reduktion der Schallemission zu bewirken. Insbesondere ist es eine Aufgabe aerodynamische Eigenschaften eines Rotorblatts für eine Windenergieanlage, eines Rotors für eine Windenergieanlage, eines Bauwerks und einer Windenergieanlage mit einem Rotor und/oder mit einem Bauwerk zu verbessern, ohne strukturelle Eigenschaften derselben zu verschlechtern.

Gemäß einem ersten Aspekt wird diese Aufgabe gelöst durch ein Rotorblatt für eine Windenergieanlage mit einer sich zwischen einem Wurzelbereich und einer Rotorblattspitze einstellenden Rotorblattlänge, einer sich zwischen einer Vorderkante und einer stumpfen Hinterkante einstellenden Rotorblatttiefe, einer sich zwischen einer Druckseite und einer Saugseite einstellenden Rotorblattdicke, einen sich auf der Saugseite erstreckenden, saugseitigen Hinterkantenbereich und/oder einen sich auf der Druckseite erstreckenden, druckseitigen Hinterkantenbereich, wobei sich der saugseitige Hinterkantenbereich und/oder der druckseitige Hinterkantenbereich ausgehend von der stumpfen Hinterkante in Richtung der Vorderkante mit einer Erstreckung von kleiner 30 %, insbesondere kleiner 20 %, der Profiltiefe erstreckt, und wobei der saugseitige Hinterkantenbereich und/oder der druckseitige Hinterkantenbereich mindestens einen Wirbelgenerator aufweist.

Der Erfindung liegt die Erkenntnis zugrunde, dass das Totwassergebiet, in dem Nachlaufturbulenzen entstehen, einen großen Teil des aerodynamischen Widerstands stumpfer Körper verursacht. Die Erfinder haben herausgefunden, dass sich in diesem Totwassergebiet eine Kármánsche Wirbelstraße, also periodisch ablösende Wirbelpaare, und im Vergleich dazu kleinere ungeordnete Wirbelpaare bilden, sodass der Strömung Energie entzogen und dadurch ein hoher Strömungswiderstand verursacht wird.

Das Rotorblatt erstreckt sich insbesondere in Richtung der Rotorblattlänge, die Rotorblatttiefe und die Rotorblattdicke. In Richtung der Rotorblattlänge erstreckt sich das Rotorblatt zwischen einem Wurzelbereich und einer Rotorblattspitze. Die Rotorblatttiefe ist insbesondere im Wesentlichen orthogonal zu der Rotorblattlänge ausgerichtet und erstreckt sich zwischen der Vorderkante und der stumpfen Hinterkante. Im Betrieb ist die Rotorblatttiefe im Wesentlichen parallel zu einer Anströmrichtung des Rotorblatts ausgerichtet. Insbesondere im Wesentlichen orthogonal zu der Richtung der Rotorblattlänge und der Rotorblatttiefe erstreckt sich das Rotorblatt in Richtung der Rotorblattdicke. Die Rotorblatttiefe und die Rotorblattdicke definieren insbesondere an im Wesentlichen jeder Position entlang der Rotorblattlänge ein aerodynamisches Profil. Zur Effizienzsteigerung weist das Rotorblatt mindestens einen Wirbelgenerator auf, der in oder an einem Bereich der stumpfen Hinterkante auf der Druckseite und/oder der Saugseite angeordnet ist. Dieser als Hinterkantenbereich bezeichnete Bereich erstreckt sich ausgehend von der stumpfen Hinterkante des Rotorblatts in Richtung der Vorderkante. Der Hinterkantenbereich hat hierbei eine Erstreckung kleiner 30 %, insbesondere kleiner 20 %, der Profiltiefe.

Der mindestens eine Wirbelgenerator kann auf der stumpfen Hinterkante, insbesondere auf einer Kante, die gebildet ist durch die stumpfe Hinterkante und die Saugseite, oder in einem Bereich vor der stumpfen Hinterkante zwischen 70% und 100%, insbesondere zwischen 80% und 100%, der Profiltiefe von der Vorderkante aus gemessen angeordnet sein.

Die Saugseite des Rotorblattes kann insbesondere einer Fläche des Rotorblattes entsprechen, die im Betrieb der Windenergieanlage einen Auftrieb erzeugt und somit bei Luftumströmung die Drehung eines Rotors, an dem das Rotorblatt befestigt ist, antreibt. Die Druckseite kann insbesondere der Saugseite gegenüberliegen. Bei Luftumströmung bildet sich insbesondere sowohl an der Saugseite als auch an der Druckseite eine Grenzschicht.

Unter einer stumpfen Hinterkante kann insbesondere verstanden werden, dass das Rotorblatt an seinem hinteren Ende, also an der Hinterkante, noch eine spezifische Hinterkantenhöhe aufweist und demnach im Wesentlichen nicht spitz zuläuft.

Insbesondere kann ein Profilverlauf des Rotorblatts eine Anzahl an Profilschnitten aufweisen, die die Außenkontur des Rotorblatts definieren. Ein Rotorblatt umfasst in der Regel eine Mehrzahl unterschiedlicher Profilschnitte. Die Profilschnitte sollen an den verschiedenen Radiuspositionen eines Rotorblatts einen im Wesentlichen aerodynamisch optimalen Strömungsverlauf ermöglichen. Insbesondere kann mindestens ein Profilschnitt der mehreren Profilschnitte die stumpfe Hinterkante aufweisen. Insbesondere kann die stumpfe Hinterkante eine Hinterkantenhöhe von mehr als 0,5 % einer Profilschnitttiefe des Profilschnitts aufweisen. Bevorzugt können weitere Profilschnitte, insbesondere die weiter in Richtung der Blattspitze liegenden Profilschnitte des Rotorblattes frei von einer stumpfen Hinterkante sein.

Durch das Anordnen des mindestens einen Wirbelgenerators in dem Hinterkantenbereich auf der Saugseite und/oder der Druckseite kann eine erhöhte Durchmischung einer Ablösung an der stumpfen Hinterkante mit energiereicher Strömung erzielt werden und dadurch eine Größe des Totwassergebiets, in dem Nachlaufturbulenzen entstehen, hinter stumpfen Körpern deutlich reduziert werden. Insbesondere kann diese Anordnung der Wirbelgeneratoren die Entstehung der ungeordneten Wirbel, deren Drehachse im Wesentlichen senkrecht zu einer Ebene der stumpfen Hinterkante ausgerichtet ist, verhindern oder zumindest reduzieren. Dadurch steigt der Druck im Bereich hinter dem Profil deutlich an, und der Strömungswiderstand wird, insbesondere durch die Verkleinerung des Ablösegebietes hinter dem Profil, reduziert. Zwar wird auch ein Reibungswiderstand des Profils durch zusätzliche Strömungsflächen des mindestens einen Wirbelgenerators leicht erhöht. Aufgrund des erzielbaren Druckwiderstands kann durch den mindestens einen Wirbelgenerator im Hinterkantenbereich jedoch eine Gesamtwiderstandsreduktion erreicht werden. Gleichzeitig kann durch den mindestens einen Wirbelgenerator eine Umströmung von dicken Profilen, insbesondere im Wurzelbereich von Rotorblättern von Windkraftanlagen, optimiert werden. Mittels des mindestens einen Wirbelgenerators kann folglich die Leistung eines Rotorblattes mit einer stumpfen Hinterkante, insbesondere im Bereich der stumpfen Hinterkante, verbessert werden.

Ein weiterer Vorteil der vorliegenden Lösung besteht darin, dass durch gezielte Störung einer homogenen Strömung an der stumpfen Hinterkante bzw. hinter der stumpfen Hinterkante des Profils eine Ausbildung alternierender Nachlaufwirbel unterbunden werden kann, sodass sich keine akustisch relevanten periodischen Wirbelstraßen bilden und der Strömungswiderstand am Profilschnitt reduziert wird. Dadurch kann eine Geräuschemission reduziert werden.

Demnach können durch das Anordnen des mindestens einen Wirbelgenerators in dem Hinterkantenbereich auf der Saugseite und/oder der Druckseite die aerodynamischen Eigenschaften des Rotorblatts, insbesondere an einem Innenblatt verbessert werden, ohne strukturelle Eigenschaften zu verschlechtern. Vorteilhaft ist ferner, dass durch die vorgeschlagene Lösung insgesamt eine Effizienz einer Windenergieanlage und dadurch einen Jahresertrag gesteigert werden kann.

Die Anordnung des mindestens einen Wirbelgenerators an dem saugseitigen und/oder druckseitigen Hinterkantenbereich stellt auch insbesondere eine kostengünstige Maßnahme dar, um die Leistung und die akustischen Eigenschaften des Rotorblatts, insbesondere an der stumpfen Hinterkante, zu verbessern. Insbesondere kann dadurch der strukturelle Aufbau der Rotorblätter im Bereich der stumpfen Hinterkante und/oder eine strukturelle Auslegung der Rotorblätter und insbesondere die Herstellung vereinfacht werden, um Kosten zu reduzieren. Dadurch kann insbesondere eine Komplexität bisheriger Herstellungsprozesse von Rotorblättern reduziert werden. Beispielsweise können durch die vorgeschlagene Lösung Kontureinleger zur Erreichung einer exakt scharfen Hinterkante bei der Herstellung einer Hinterkante weggelassen werden, sodass Kosten eingespart werden können.

Insbesondere können vorstehend beschriebene Vorteile erzielt werden, ohne eine Außenabmessung, insbesondere eine Rotorblattlänge und eine Rotorblatttiefe, des Rotorblatts zu ändern. Beispielsweise kann durch diese Lösung ein Profilschnitt mit der stumpfen Hinterkante weiter außen, also weiter in Richtung der Blattspitze, am Rotorblatt und/oder höhere Profilabschnitte mit der stumpfen Hinterkante verwendet werden ohne dadurch eine Schallemission zu erhöhen, um weitere strukturelle Vorteile erzielen zu können. Durch den Gewinn an relativer Dicke weiter außen am Rotorblatt lassen sich strukturell vorteilhaftere Rotorblattgeometrien realisieren. Dadurch ist der Einsatz von leichteren und kostengünstigeren Rotorblättern möglich.

Die vorstehend genannten Vorteile können durch die vorgeschlagene Lösung insbesondere betriebslastneutral erreicht werden.

Das hier beschriebene Rotorblatt ist nicht auf den Einsatz bei Windenergieanlagen beschränkt, auch wenn es hier besonders vorteilhaft und auf wirtschaftliche Art und Weise eingesetzt werden kann. Vielmehr kann das hier beschriebene Rotorblatt auch bei Propellern, Hubschrauberrotoren oder anderen Strömungsmaschinen eingesetzt werden. So kann durch das Anordnen des mindestens einen Wirbelgenerators in dem Hinterkantenbereich auf der Saugseite und/oder der Druckseite beispielsweise auch die Strömung an dicken Profilen von Probellern, Hubschrauberrotoren oder anderen Strömungsmaschinen optimiert werden.

Besonders bevorzugt können mindestens zwei, drei oder mehrere Wirbelgeneratoren an dem saugseitigen Hinterkantenbereich und/oder dem druckseitigen Hinterkantenbereich angeordnet sein. Insbesondere bevorzugt können die mindestens zwei, drei oder mehreren Wirbelgeneratoren beabstandet voneinander und/oder in Richtung der Rotorblatttiefe im Wesentlichen gleichmäßig verteilt und/oder im Wesentlichen an der stumpfen Hinterkante oder in einem im Wesentlichen identischen Abstand zur stumpfen Hinterkante angeordnet sein. Durch die Anordnung von mindestens zwei, drei oder mehreren Wirbelgeneratoren kann sowohl der Widerstand als auch die Geräuschemission des Rotorblatts weiter reduziert werden. Gleichzeitig kann eine Umströmung von dicken Profilen, insbesondere im Wurzelbereich von Rotorblättern von Windkraftanlagen, weiter optimiert werden. Dadurch kann die Leistung eines Rotorblatts weiter verbessert werden.

Besonders bevorzugt ist es, wenn das Rotorblatt einen sich auf der Saugseite erstreckenden, saugseitigen Hinterkantenbereich und einen sich auf der Druckseite erstreckenden, druckseitigen Hinterkantenbereich, wobei sich der saugseitige Hinterkantenbereich und der druckseitige Hinterkantenbereich ausgehend von der stumpfen Hinterkante in Richtung der Vorderkante mit einer Erstreckung von kleiner 30 %, insbesondere kleiner 20 %, der Profiltiefe erstreckt, und wobei der saugseitige Hinterkantenbereich und der druckseitige Hinterkantenbereich mindestens einen Wirbelgenerator aufweist.

Insbesondere bevorzugt ist es, wenn das Rotorblatt einen sich auf der Saugseite erstreckenden, saugseitigen Hinterkantenbereich, wobei sich der saugseitige Hinterkantenbereich ausgehend von der stumpfen Hinterkante in Richtung der Vorderkante mit einer Erstreckung von kleiner 30 %, insbesondere kleiner 20 %, der Profiltiefe erstreckt, und wobei der saugseitige Hinterkantenbereich mindestens einen Wirbelgenerator aufweist. Vorzugsweise kann das Rotorblatt einen sich auf der Druckseite erstreckenden, druckseitigen Hinterkantenbereich aufweisen, wobei sich der druckseitige Hinterkantenbereich ausgehend von der stumpfen Hinterkante in Richtung der Vorderkante mit einer Erstreckung von kleiner 30 %, insbesondere kleiner 20 %, der Profiltiefe erstreckt, und wobei der druckseitige Hinterkantenbereich frei von Wirbelgeneratoren ist.

Eine bevorzugte Fortbildung des Rotorblatts zeichnet sich dadurch aus, dass der Wirbelgenerator derart ausgebildet ist, dass der saugseitige Hinterkantenbereich und/oder der druckseitige Hinterkantenbereich eine inhomogene Geometrie aufweist, sodass an der stumpfen Hinterkante ausbildende Wirbelgebiete unterbunden oder abgeschwächt werden. Dadurch kann das Nachlaufgebiet und folglich auch der Strömungswiderstand effizient verkleinert werden.

Insbesondere können die Wirbelgeneratoren als eine Erhöhung und/oder eine Vertiefung und/oder eine Ausnehmung einer Oberfläche des Hinterkantenbereichs ausgebildet sein. Unter einer inhomogenen Geometrie kann insbesondere verstanden werden, dass eine Oberfläche Unregelmäßigkeiten und bevorzugt eine gewisse Oberflächenrauhigkeit aufweist.

Es ist bevorzugt, dass der Wirbelgenerator einen Vortexgenerator, insbesondere ein Paar an Vortexgeneratoren, aufweist, wobei vorzugsweise der Vortexgenerator von der stumpfen Hinterkante auskragt, wobei vorzugsweise der Vortexgenerator als Vane-Vortexgenerator oder als Wishbone-Vortexgenerator ausgebildet ist.

Insbesondere können die Vortexgeneratoren demnach flügelartig, deltaförmig, hufeisenförmig oder entsprechend einer alternativen Geometrie ausgebildet sein.

Unter einem Vortexgenerator kann insbesondere eine Art Störkörper verstanden werden, der auf der Profiloberfläche angebracht werden kann. Beispielsweise kann es sich hierbei um Plättchen handeln, die insbesondere in einem bestimmten Winkel zueinander angeordnet sein können, um die gewünschte Wirbelbildung in bestimmter Weise zu erhöhen, um dadurch eine Durchmischung der Ablösung zu erzielen und das Nachlaufgebiet zu reduzieren.

Der Vortexgenerator kann beispielsweise stoffschlüssig mit einer Oberfläche verbunden, insbesondere auf der Oberfläche aufgeklebt werden. Dadurch kann ein Rotorblatt besonders einfach umgerüstet bzw. mit Vortexgeneratoren ausgestattet werden.

Bevorzugt kann der mindestens eine Wirbelgenerator und/oder der Vortexgenerator, insbesondere die mehreren Wirbelgeneratoren und/oder die mehreren Vortexgeneratoren, ausgebildet sein um gleichgerichtete (Co-Rotating) oder entgegengesetzt gerichtete (Counter-Rotating) Wirbelpaare zu erzeugen. Dadurch kann eine sich ohne Wirbelgeneratoren und/oder Vortexgeneratoren bildende Kärmänsche Wirbelstraße, also sich gegenläufig ablösende Wirbel, durchmischt werden und dadurch das Nachlaufgebiet verkleinert werden.

In einer weiteren bevorzugten Ausführungsvariante des Rotorblatts ist vorgesehen, dass sich der Wirbelgenerator mit einer im Wesentlichen parallel zur Rotorblattdicke ausgerichteten Auskraglänge über einer Rotorblattoberfläche erstreckt, wobei mindestens ein den Wirbelgenerator aufweisender Profilschnitt, vorzugsweise zwei oder mehr oder alle Profilschnitte mit einem Wirbelgenerator, des Rotorblatts eine Hinterkantenhöhe der stumpfen Hinterkante aufweist bzw. aufweisen, wobei die Auskraglänge kleiner gleich 50 % der Hinterkantenhöhe beträgt, und/oder mindestens ein den Wirbelgenerator aufweisender Profilschnitt, vorzugsweise zwei oder mehr oder alle Profilschnitte mit einem Wirbelgenerator, des Rotorblatts eine sich im Betrieb einstellende Grenzschicht mit einer Grenzschichthöhe aufweist, wobei die Auskraglänge mehr als 20 % der Grenzschichthöhe beträgt.

Es ist besonders bevorzugt, wenn die Auskraglänge eines Profilschnitts kleiner gleich 50 % der Hinterkantenhöhe dieses Profilschnitts und/oder eines benachbarten Profilschnitts ist. Durch eine derartige Auskraglänge können die aerodynamischen Eigenschaften verbessert werden, sodass der auftretende Reibungswiderstand und der auftretende Druckwiderstand zu einer Gesamtwiderstandsreduktion führen.

Grenzschichten, bilden sich in Übergangsbereichen von parallelen Strömungen mit unterschiedlichen Geschwindigkeiten aus. Im Falle eines Rotorblattes kann insbesondere eine Luftströmung, die das Rotorblatt umströmt, direkt an der Fläche des Rotorblattes aufgrund der Reibung zwischen Rotorblatt und Luft eine Geschwindigkeit von Null aufweisen. Mit zunehmendem Abstand von einer Oberfläche wird die Geschwindigkeit größer, bis die Geschwindigkeit der umgebenden Luftströmung erreicht ist. Dieser Übergang wird als Grenzschicht oder Scherschicht bezeichnet. Die Dicke der Grenzschicht ist insbesondere von der inneren Reibung der Luft abhängig. Bei einer Strömungsgeschwindigkeit, die in einem typischen Bereich einer Strömungsgeschwindigkeit um ein Rotorblatt im Betrieb einer Windenergieanlage liegt, reicht die Grenzschicht insbesondere an der stumpfen Hinterkante des Rotorblattes über das Ende der Saugseite hinaus und löst sich insbesondere erst in einem gewissen Abstand von der stumpfen Hinterkante des Rotorblattes, zum Beispiel durch Wirbelbildung, auf. Dabei verläuft die Grenzschicht an der stumpfen Hinterkante zwischen Totwassergebiet und Profilumströmung.

Durch eine Auskraglänge, die insbesondere mindestens der 20 % Höhe einer lokalen Grenzschicht entspricht, können die aerodynamischen Eigenschaften verbessert werden, sodass der auftretende Reibungswiderstand und der auftretende Druckwiderstand zu einer Gesamtwiderstandsreduktion führen.

Gemäß einer weiteren Ausführungsvariante des Rotorblatts ist vorgesehen, dass die stumpfe Hinterkante zumindest eines Profilschnitts gerade ausgebildet ist und sich im Wesentlichen parallel zur Ausrichtung der Rotorblattdicke erstreckt, und/oder eine oder die Hinterkantenhöhe der stumpfen Hinterkante mindestens eines Profilschnitts mehr als 50 %, insbesondere mehr als 60 %, der Rotorblattdicke beträgt.

Bevorzugt kann dieser Profilschnitt mit der stumpfen Hinterkante als ein Flatbackprofil ausgebildet sein. Unter einem Flatbackprofil kann insbesondere ein verkürztes Profil in Profiltiefenrichtung aufgrund einer dicken, also abgestumpften, Hinterkante, also ein stumpfer Körper, verstanden werden. Grundsätzlich kann demnach unter einem Profilabschnitt mit einer stumpfen Hinterkante ein Flatbackprofil verstanden werden.

Unter einer geraden Hinterkante kann insbesondere eine Hinterkante verstanden werden, die im Wesentlichen nicht konkav oder konvex ausgebildet ist und/oder Krümmungen aufweist. Hierbei kann die Hinterkantenhöhe im Wesentlichen einer Rotorblattdicke in diesem Profilschnitt entsprechen.

Insbesondere kann die stumpfe Hinterkante angrenzend zu der Saugseite und/oder die stumpfe Hinterkante angrenzend zu der Druckseite eine Auswölbung und/oder eine Einwölbung und/oder mindestens eine oder zwei Krümmungen aufweisen. Hierbei kann insbesondere eine Höhe der stumpfen Hinterkante ohne die Krümmungen mindestens 50 %, insbesondere mehr als 60 %, der Rotorblattdicke betragen. Durch diese Ausgestaltung kann der strukturelle Aufbau der Rotorblätter im Bereich der stumpfen Hinterkante weiter vereinfacht werden, um eine Kostenreduktion zu erzielen.

In einer weiteren bevorzugten Fortbildung des Rotorblatts ist vorgesehen, dass das Rotorblatt zwischen dem Wurzelbereich mit einem im Wesentlichen runden Querschnitt und einem Außenabschnitt mit einem im Wesentlichen geschlossenen Profil einen stumpfen Abschnitt umfasst, der die stumpfe Hinterkante aufweist, wobei sich der stumpfe Abschnitt bis hin zu einer relativen Rotorblattlänge von größer 30 %, vorzugsweise größer 40 %, insbesondere größer 50 %, erstreckt.

Der stumpfe Abschnitt kann demnach insbesondere eine Erstreckung ausgehend von dem Wurzelbereich in Richtung des Außenabschnitts aufweisen, die größer als 30 %, vorzugsweise größer 40 %, insbesondere größer 50 %, der Rotorblattlänge, die sich von dem Wurzelbereich bis zu der Blattspitze erstreck. Durch die Anordnung des mindestens einen Wirbelgenerators kann ein größerer Bereich des Rotorblatts die stumpfe Hinterkante definieren. Dadurch können sowohl die aerodynamischen Eigenschaften als auch die strukturellen Eigenschaften des Rotorblatts weiter verbessert werden.

Gemäß einer weiteren bevorzugten Ausführungsvariante des Rotorblatts ist vorgesehen, dass für zumindest einen Profilschnitt der saugseitige Hinterkantenbereich einen saugseitigen Übergangsbereich angrenzend an die stumpfe Hinterkante und/oder der druckseitige Hinterkantenbereich einen druckseitigen Übergangsbereich angrenzend an die stumpfe Hinterkante aufweist, wobei der saugseitige Übergangsbereich zwischen einer saugseitigen Profilkontur und der stumpfen Hinterkante angeordnet ist und/oder der druckseitige Übergangsbereich zwischen einer druckseitigen Profilkontur und der stumpfen Hinterkante angeordnet ist, wobei vorzugsweise der saugseitige Übergangsbereich und/oder der druckseitige Übergangsbereich einen Radius aufweisen.

Der Radius des Übergangsbereichs kann insbesondere derart gewählt sein, dass eine exakte Positionierung von Laminatlagen und eine Entformbarkeit bei der Herstellung gewährleistet werden kann.

Der Übergangsbereich kann insbesondere eine Abrundung definieren. Vorzugsweise können die Abrundungen eine konvexe Kontur aufweisen. Bevorzugt kann der Radius der Abrundung maximal einem Betrag der Hinterkantenhöhe entsprechen. Hierbei kann vorzugsweise der mindestens eine Wirbelgenerator im Bereich der Abrundung oder unmittelbar vor der Abrundung, jedoch nicht mehr exakt auf der stumpfen Hinterkante platziert werden. Der als Hinterkantenbereich bezeichnete Bereich erstreckt sich ausgehend von der stumpfen Hinterkante des Rotorblatts in Richtung der Vorderkante, wobei insbesondere die Abrundung Teil des Hinterkantenbereichs sein kann.

Durch diese Ausgestaltung kann der strukturelle Aufbau der Rotorblätter im Bereich der stumpfen Hinterkante weiter vereinfacht werden, um eine Kostenreduktion zu erzielen.

Besonders bevorzugt ist der mindestens eine Wirbelgenerator im saugseitigen Übergangsbereich und/oder im druckseitigen Übergangsbereich angeordnet. Dadurch kann das Nachlaufgebiet und dadurch auch der Strömungswiderstand effizient verkleinert werden.

In einer weiteren bevorzugten Ausführungsvariante ist vorgesehen, dass der mindestens eine Wirbelgenerator in einem saugseitigen Nahbereich und/oder einem druckseitigen Nahbereich angrenzend an die stumpfe Hinterkante angeordnet ist, wobei sich der saugseitige Nahbereich und/oder der druckseitige Nahbereich mit kleiner gleich 10 % der Profiltiefe von der stumpfen Hinterkante ausgehend in Richtung der Vorderkante erstreckt, wobei vorzugsweise der saugseitige Nahbereich den saugseitigen Übergangsbereich und/oder der druckseitige Nahbereich den druckseitigen Übergangsbereich umfasst.

Insbesondere bevorzugt kann hierbei der saugseitige Nahbereich ein Teil des saugseitigen Hinterkantenbereichs sein. Entsprechend kann insbesondere der druckseitige Nahbereich Teil des druckseitigen Hinterkantenbereichs sein.

Der mindestens eine Wirbelgenerator kann auf der stumpfen Hinterkante oder in einem Bereich vor der stumpfen Hinterkante zwischen 90 % und 100% der Profiltiefe von der Vorderkante aus gemessen angeordnet sein. Dadurch kann eine Durchmischung einer Ablösung an der stumpfen Hinterkante mit energiereicher Strömung weiter erhöht werden und dadurch die Größe des Totwassergebiets, in dem Nachlaufturbulenzen entstehen, weiter reduziert werden.

Insbesondere bevorzugt kann auf der Saugseite ein saugseitiger Wirbelgenerator und auf der Druckseite ein druckseitiger Wirbelgenerator angeordnet ist, wobei vorzugsweise der saugseitige Wirbelgenerator und der druckseitige Wirbelgenerator hinsichtlich einer relativen Rotorblattlänge an der gleichen Position angeordnet sind oder hinsichtlich der relativen Rotorblattlänge versetzt zueinander angeordnet sind. Vorzugsweise können hierbei der saugseitige Wirbelgenerator und der druckseitige Wirbelgenerator im Wesentlichen baugleich ausgestaltet sein und sich insbesondere nur in einer Anordnung unterscheiden. Alternativ können beispielsweise auch unterschiedliche Wirbelgeneratortypen verwendet werden. Durch diese Ausgestaltung können die Wirbelgeneratoren in Abhängigkeit der Rotorblattgeometrie und/oder weiterer Einflussfaktoren angeordnet werden.

Eine weitere bevorzugte Fortbildung des Rotorblatts zeichnet sich dadurch aus, dass das Rotorblatt einen sich auf der Saugseite erstreckenden, saugseitigen Vorderkantenbereich und/oder einen sich auf der Druckseite erstreckenden, druckseitigen Vorderkantenbereich umfasst, wobei sich der saugseitige Vorderkantenbereich und/oder der druckseitige Vorderkantenbereich ausgehend von der Vorderkante in Richtung der stumpfen Hinterkante mit einer Erstreckung von kleiner 80 %, insbesondere kleiner 70 %, der Profiltiefe erstreckt, wobei der saugseitige Vorderkantenbereich und/oder der druckseitige Vorderkantenbereich mindestens einen weiteren Wirbelgenerator aufweist, und/oder einen den Wurzelbereich aufweisenden Strukturabschnitt mit einem im Wesentlichen kreisrunden Profilschnitt umfasst, wobei in dem Strukturabschnitt mindestens ein weiterer Wirbelgenerator angeordnet ist.

Vorzugsweise sind die weiteren Wirbelgeneratoren in einem vorderen Profilbereich und/oder zwischen einem Kreisanschluss des Wurzelbereichs und dem letzten Profilschnitt angeordnet. Durch diese Ausgestaltung kann zusätzliche die Strömung an der Profiloberfläche stabilisiert und der erreichbare Auftrieb gesteigert werden. Hierbei kann vorzugsweise eine Ablösung einer durch Oberflächenreibung energiearmen Grenzschicht verhindert werden, indem die energiearme Grenzschicht mit frischer, energiereicher Strömung abseits der Profiloberfläche durchmischt wird. Durch diese Energieanreicherung kann die Grenzschicht einen größeren Druckgradienten überwinden, um eine Ablösung zu verhindern und/oder zu höhere Betriebsanstellwinkeln zu ermöglichen.

Es wurde festgestellt, dass insbesondere durch eine Kombination von Wirbelgeneratoren an dem saugseitigen und/oder druckseitigen Hinterkantenbereich und von Wirbelgeneratoren auf dem saugseitigen und/oder druckseitigen Vorderkantenbereich die aerodynamischen Eigenschaften weiter verbessert werden können.

Eine weitere bevorzugte Fortbildung des Rotorblatts zeichnet sich dadurch aus, dass das Rotorblatt mindestens zwei Wirbelgeneratoren umfasst, zwischen denen in Richtung der Rotorblattlänge ein Abstand besteht, wobei dieser Abstand mindestens eine 1-fache bis maximal eine 100-fache, vorzugsweise mindestens eine 1-fache bis maximal eine 70-fache, weiter vorzugsweise mindestens eine 2-fache bis maximal eine 50-fache, weiter vorzugsweise mindestens eine 2-fache bis maximal eine 40-fache, weiter vorzugsweise mindestens eine 3-fache bis maximal eine 30-fache, weiter vorzugsweise mindestens eine 4-fache bis maximal eine 20-fache, weiter vorzugsweise mindestens eine 5-fache bis maximal eine 15-fache, Auskraglänge der mindestens zwei Wirbelgeneratoren beträgt.

Insbesondere bevorzugt kann der Abstand mindestens einer 1-fache oder einer 2-fache oder einer 3-fache oder einer 4-fache oder einer 5-fache Auskraglänge der mindestens zwei Wirbelgeneratoren entsprechen. Weiter vorzugsweise kann der Abstand maximal einer 100-fachen oder einer 90-fachen oder einer 80-fachen oder einer 70-fachen oder einer 60-fachen oder einer 50-fachen oder einer 40-fachen oder einer 30-fachen oder einer 25-fachen oder einer 20-fachen oder einer 15-fachen Auskraglänge der mindestens zwei Wirbelgeneratoren entsprechen. Durch diesen Abstand kann insbesondere eine weiter erhöhte Widerstandsreduktion erzielt werden.

Ferner ist bevorzugt, dass das Rotorblatt mehrere Wirbelgeneratoren umfasst, wobei zwischen den mehreren Wirbelgeneratoren in Richtung der Rotorblattlänge ein Abstand besteht, wobei der Abstand geringer wird je weiter die Wirbelgeneratoren von dem Wurzelbereich beabstandet sind, und/oder wobei eine Auskraglänge der mehreren Wirbelgeneratoren mit größerer Beabstandung vom Wurzelbereich geringer wird, wobei vorzugsweise die Auskraglänge der mehreren Wirbelgeneratoren diskontinuierlich geringer wird und ferner vorzugsweise zwei oder drei unterschiedliche Auskraglängen vorgesehen sind.

Insbesondere bevorzugt kann das Rotorblatt zwischen 10 und 100 Wirbelgeneratoren, umfassen.

Vorzugsweise kann auch keine durchgehende Anordnung von Wirbelgeneratoren vorgesehen sein. Insbesondere kann hierbei der Abstand zwischen den Wirbelgeneratoren unregelmäßig sein oder eine Unregelmäßigkeit aufweisen.

Entscheidend für den erfindungsmäßigen Erfolg ist, dass die Wirbelgeneratoren derart angeordnet sind und/oder derartige Abmessungen, insbesondere derartige Auskraglängen, aufweisen, dass eine erforderliche Schallemission und/oder Widerstandsreduktion erzielt werden kann.

Gemäß einem weiteren Aspekt wird die eingangs genannte Aufgabe gelöst durch einen Rotor für eine Windenergieanlage, umfassend mindestens ein Rotorblatt, wie vorstehend beschrieben.

Darüber hinaus wird die eingangs genannte Aufgabe gelöst durch ein Bauwerk, insbesondere Turm, vorzugsweise für eine Windenergieanlage, umfassend eine statische Einheit, insbesondere eine Turmwand, wobei die statische Einheit mindestens einen Wirbelgenerator aufweist.

Die Wirbelgeneratoren könnten helfen die Schwingungen der Kármánwirbel zu modifizieren bzw. zu reduzieren. Des Weiteren können insbesondere Bauwerke mit derartigen Wirbelgeneratoren ausgestattet werden, um Resonanzphänomene und Windlasten zu reduzieren.

Durch diese Ausgestaltung kann beispielsweise ein Turm für eine Windenergieanlage mit einem konstanten Außenradius verwendet werden. Auch kann insbesondere ein Durchmesser eines derartigen Turms reduziert werden. Dadurch können die Transportabmessungen reduziert werden.

Gemäß einem weiteren Aspekt wird die eingangs genannte Aufgabe gelöst durch eine Windenergieanlage, umfassend einen Rotor, wie vorstehend beschrieben, und/oder ein Bauwerk, wie vorstehend beschrieben.

Ein Vorteil der vorliegenden Lösung besteht darin, dass durch einen verkleinerten Bereich mit abgelöster Strömung hinter Profilschnitten ein radial nach außen gerichtete Luftmassenstrom im Totwassergebiet, der der Windkraftanlage im Betrieb zusätzlich Energie entzieht, deutlich reduziert werden kann. Dadurch können leistungsfähigere und kosteneffizientere Windkraftanlagen erzielt werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Rotorblatts verwiesen.

Bevorzugte Ausführungsbeispiele werden exemplarisch anhand der beiliegenden Figuren erläutert. Es zeigen:
- Fig. 1: eine schematische, dreidimensionale Ansicht einer beispielhaften Ausführungsform einer Windenergieanlage;
- Fig. 2: eine schematische Ansicht eines Profilschnitts mit einer stumpfen Hinterkante und Wirbelgeneratoren an dem saugseitigen Hinterkantenbereich;
- Fig. 3: eine schematische Ansicht eines Profilschnitts mit einer stumpfen Hinterkante und Wirbelgeneratoren an dem saugseitigen Hinterkantenbereich und dem druckseitigen Hinterkantenbereich;
- Fig. 4: eine schematische Ansicht eines Profilschnitts mit einer stumpfen Hinterkante und einer zusätzlichen Krümmung im Bereich der Hinterkante mit Wirbelgeneratoren an dem saugseitigen Hinterkantenbereich in einem Bereich vor der Krümmung und dem druckseitigen Hinterkantenbereich;
- Fig. 5: eine schematische Ansicht eines Rotorblatts in einer Ansicht auf die Saugseite mit Wirbelgeneratoren; und
- Fig. 6: eine schematische Ansicht eines Rotorblatts in einer Ansicht auf die Druckseite mit Wirbelgeneratoren.

In den Figuren sind gleiche oder im Wesentlichen funktionsgleiche bzw. -ähnliche Elemente mit den gleichen Bezugszeichen bezeichnet.

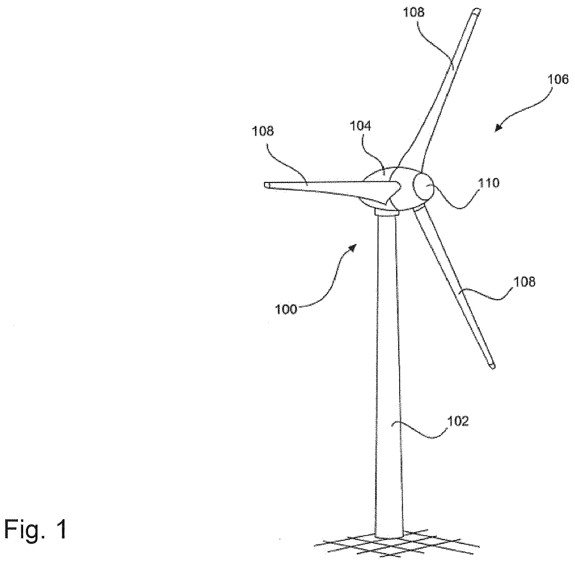

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, sodass eine vorgesehene Anordnung von Wirbelgeneratoren nicht erkennbar ist.

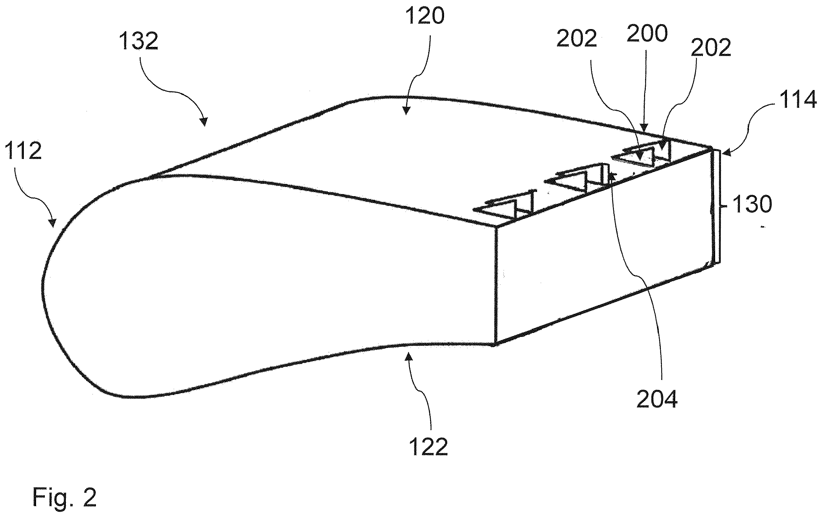

Figur 1 zeigt eine schematische, dreidimensionale Ansicht einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Die Rotorblätter 108 umfassen hierbei an oder in einem saugseitigen Hinterkantenbereich und/oder einen druckseitigen Hinterkantenbereich mindestens einen Wirbelgenerator (in Figur 1 nicht erkennbar), wie in den Figuren 2 bis 6 gezeigt. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

Die Figuren 2 bis 4 zeigen jeweils einen Profilschnitt 132 mit einer stumpfen Hinterkante 114, der auch als Flatbackprofil bezeichnet werden kann. Die stumpfe Hinterkante 114 hat hierbei eine spezifische Hinterkantenhöhe 130 (in Figur 2 gekennzeichnet) und definiert ein in Profiltiefenrichtung verkürztes Profil. Der Profilschnitt 132 weist eine Rotorblatttiefe zwischen der Vorderkante 112 und der stumpfen Hinterkante 114 auf. Der Profilschnitt 132 entspricht insbesondere dem Querschnitt eines Rotorblattes an einer beliebigen Stelle in Längsrichtung zwischen dem Wurzelbereich und der Blattspitze. Dieser Querschnitt ist insbesondere dadurch charakterisiert, dass eine Flächenorthogonale dieses Querschnitts im Wesentlichen parallel zur Längsrichtung des Rotorblattes ausgerichtet ist.

Der Profilschnitt 132 weist eine Saugseite 120 und eine Druckseite 122 auf, die eine Rotorblattdicke definieren. Die Saugseite 120 ist hierbei im Wesentlichen konvex ausgebildet. Im Gegensatz dazu ist die Druckseite 122 im Wesentlichen konkav ausgebildet. Durch diese Ausgestaltung kann bei Umströmung des Profils mit bewegter Luft auf der Saugseite gegenüber der Druckseite ein Unterdruck entstehen, sodass ein aerodynamischer Auftrieb erzeugt werden kann. Alternativ können die Druckseite 122 und/oder die Saugseite 120 beispielsweise auch in einer anderen Form ausgebildet sein.

Figur 2 zeigt insgesamt drei, im Wesentlichen gleichmäßig voneinander beabstandete Wirbelgeneratoren 200 mit jeweils einem Paar an Vortexgeneratoren 202 auf der Saugseite 120. Die Wirbelgeneratoren 200 sind hierbei in einem saugseitigen Hinterkantenbereich (in Figur 2 nicht gekennzeichnet), der sich ausgehend von der stumpfen Hinterkante 114 in Richtung der Vorderkante 120 erstreckt. Ein derartiger saugseitiger Hinterkantenbereich kann eine Erstreckung von kleiner 30 %, insbesondere kleiner 20 %, der Profiltiefe aufweisen. In dem hier gezeigten Beispiel sind die Wirbelgeneratoren 200 im Wesentlichen in einem saugseitigen Nahbereich (in Figur 2 nicht gezeigt), der eine Erstreckung kleiner gleich 10 % der Profiltiefe von der stumpfen Hinterkante 114 ausgehend in Richtung der Vorderkante 112 aufweist, angeordnet. Im Wesentlichen sind die Wirbelgeneratoren 200 an der stumpfen Hinterkante 114 angeordnet, sodass die Vortexgeneratoren 202 ausgehend von der stumpfen Hinterkante 114 auskragen und die Auskraglänge 204 sich im Wesentlichen von der stumpfen Hinterkante 114 aus erstreckt. Die Auskraglänge 204 erstreckt sich hierbei im Wesentlichen parallel zur Rotorblattdicke über die Oberfläche des Rotorblatts. Die Auskraglänge 204 ist in dem gezeigten Beispiel kleiner als 50 % der Hinterkantenhöhe 130.

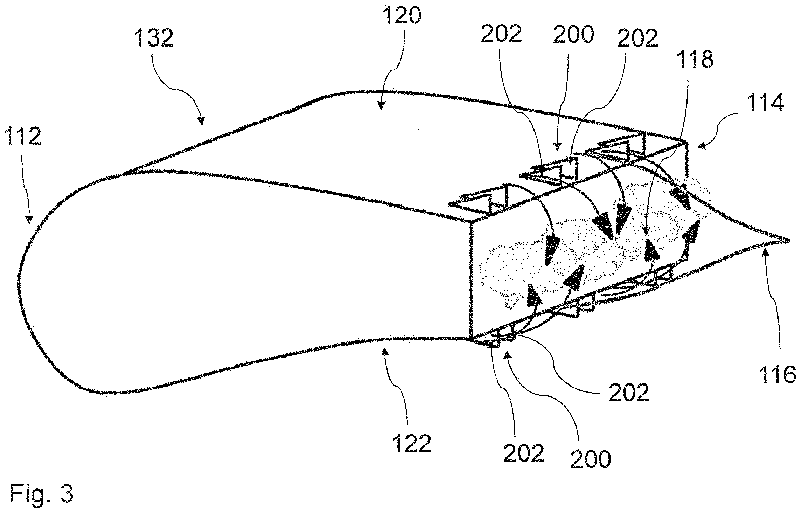

Figur 3 umfasst zusätzlich zu den drei saugseitigen Wirbelgeneratoren 200 - wie vorstehend zu Figur 2 beschrieben - drei, im Wesentlichen gleichmäßig voneinander beabstandete Wirbelgeneratoren 200 mit jeweils einem Paar an Vortexgeneratoren 202 auf der Druckseite 122. Die Druckseite 122 weist hierbei gleichermaßen wie die Saugseite 120 einen druckseitigen Hinterkantenbereich (in Figur 3 nicht gezeigt) mit einer Erstreckung von kleiner 30 %, insbesondere kleiner 20 % der Profiltiefe, auf. Der als druckseitiger Nahbereich (in Figur 3 nicht gezeigt) bezeichnete Bereich der Druckseite weist eine Erstreckung kleiner gleich 10 % der Profiltiefe von der stumpfen Hinterkante 114 ausgehend in Richtung der Vorderkante 112 auf. Figur 3 zeigt, dass die Wirbelgeneratoren auf der Druckseite 122 an der stumpfen Hinterkante 114, also im druckseitigen Nahbereich, angeordnet sind, sodass die Vortexgeneratoren 202 ausgehend von der stumpfen Hinterkante 114 auskragen und sich auch die Auskraglänge (in Figur 3 nicht gekennzeichnet) dieser Wirbelgeneratoren 200 im Wesentlichen von der stumpfen Hinterkante 114 aus erstreckt.

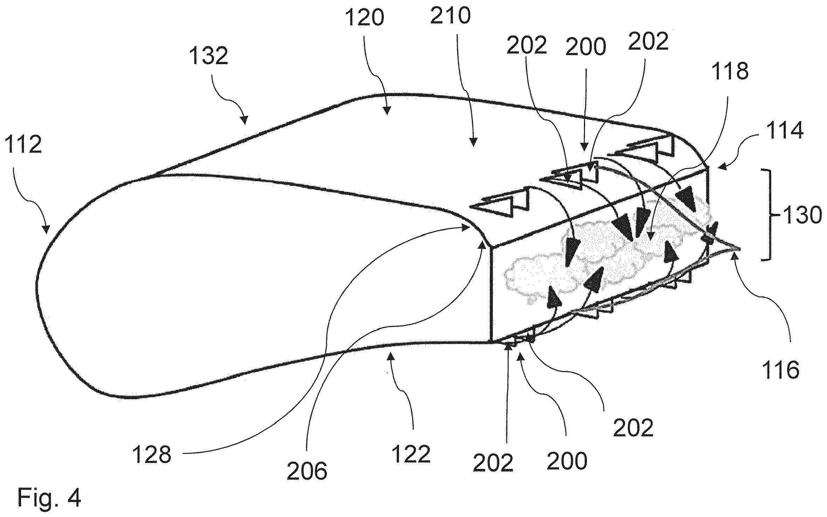

Die in den Figuren 2 und 3 dargestellten Flatbackprofile weisen eine im Wesentlichen gerade stumpfe Hinterkante 114 auf. Die Hinterkantenhöhe 130 (gekennzeichnet in Figur 2) entspricht hierbei im Wesentlichen der Rotorblattdicke in dem entsprechenden Profilschnitt. Im Gegensatz dazu zeigt Figur 4 einen saugseitigen Hinterkantenbereich mit einem saugseitigen Übergangsbereich 206 angrenzend an die Hinterkante 114. Der saugseitige Übergangsbereich 206 ist hierbei zwischen der saugseitigen Profilkontur 210 und der stumpfen Hinterkante 114 angeordnet und weist einen Radius auf. Der saugseitige Übergangsbereich 206 definiert demnach eine Abrundung, die einen Übergang von der saugseitigen Profilkontur 210 zu der stumpfen Hinterkante 114 definiert. Die Abrundung, also der saugseitige Übergangsbereich 206, ist insbesondere ein Teil des saugseitigen Hinterkantenbereichs. Die Vortexgeneratoren 202 sind in dem hier gezeigten Beispiel unmittelbar vor dem Übergangsbereich 206 angeordnet. in dem hier gezeigten Beispiel beträgt die Hinterkantenhöhe 130 mehr als 50 % bzw. mehr als 60 % der Rotorblattdicke. Die Abrundung definiert eine zusätzliche Krümmung im Bereich der Hinterkante. Durch die Positionierung der Wirbelgeneratoren unmittelbar vor dieser zusätzlichen Krümmung kann die Strömung dem Profil folgen. Dadurch kann eine Profilkontur mit einer zusätzlichen Krümmung im Bereich der Hinterkante insbesondere aerodynamisch optimal genutzt werden. Durch diese Ausgestaltung kann das Nachlaufgebiet und dadurch auch der Strömungswiderstand effizient verkleinert werden und eine neue Profilkontur im Bereich der Hinterkante aerodynamisch vorteilhaft nutzbar gemacht werden.

Die in den Figuren 2-4 gezeigten Vortexgeneratoren 202 erstrecken sich in den beispielhaft gezeigten Ausführungsformen im Wesentlichen senkrecht zur Oberfläche des Rotorblatts und beschreiben eine inhomogene Geometrie in dem entsprechenden Hinterkantenbereich. Insbesondere sind auch Winkel größer oder kleiner 90° zwischen dem Vortexgeneratoren 202 und der Oberfläche des Rotorblatts möglich. Während in Figur 2 Wirbelgeneratoren 200 auf der Saugseite 120 angeordnet sind, sind alternativ oder zusätzlich auch Wirbelgeneratoren 200 auf der Druckseite 122 möglich. Entsprechend sind auch in Figur 3 und/oder Figur 4 Wirbelgeneratoren 200 nur auf der Saugseite 120 oder nur auf der Druckseite 122 möglich. Insbesondere können die in den Figuren 2-4 gezeigten paarweise nebeneinander angeordneten Vortexgeneratoren 202 auch alternativ ausgestaltet und oder angeordnet sein.

Ohne derartige Wirbelgeneratoren 200 bilden sich in dem Totwassergebiet, in dem Nachlaufturbulenzen entstehen, Kärmänsche Wirbel und im Vergleich dazu kleinere ungeordnete Wirbelpaare, die der Strömung Energie entziehen und dadurch einen hohen Strömungswiderstand verursachen. Die Figuren 3 und 4 zeigen beispielhaft, dass durch das Anordnen der Wirbelgeneratoren 200 in dem Hinterkantenbereich auf der Saugseite und der Druckseite eine erhöhte Durchmischung 118 einer Ablösung an der stumpfen Hinterkante 114 mit energiereicher Strömung erzielt werden und dadurch die Größe des Gebiets der Nachlaufturbulenzen 116 hinter der stumpfen Hinterkante 114 deutlich reduziert werden kann. Dadurch kann insbesondere der Widerstand reduziert werden und dadurch eine Gleitzahl erhöht werden. Insbesondere kann durch eine optimale Konfiguration, vorzugsweise unter Berücksichtigung von den einen Auftriebsbeiwert und einen Widerstandsbeiwert beeinflussenden Größen, die Gleitzahl maximal erhöht werden. Die Gleitzahl bestimmt die Güte des Blattes und hängt im Wesentlichen zusätzlich von dem Blattprofil und dem Anstellwinkel ab. Je größer die Gleitzahl, desto geringer sind die Widerstandsverluste und desto besser ist der Wirkungsgrad. Durch die Anordnung der Wirbelgeneratoren kann insbesondere eine Gleitzahl von größer 20, insbesondere im Fall von Profilen mit relativ dünnen Hinterkanten eine Gleitzahl von größer 60 und/oder im Fall von dickeren Profilen eine Gleitzahl von etwa 20-40, erzielt werden.

Durch die vorstehend beschriebene gezielte Störung der homogenen Strömung an der stumpfen Hinterkante 114 wird eine Bildung von akustisch relevanten periodischen Wirbelstraßen unterbunden oder zumindest reduziert, sodass eine Geräuschemission reduziert wird.

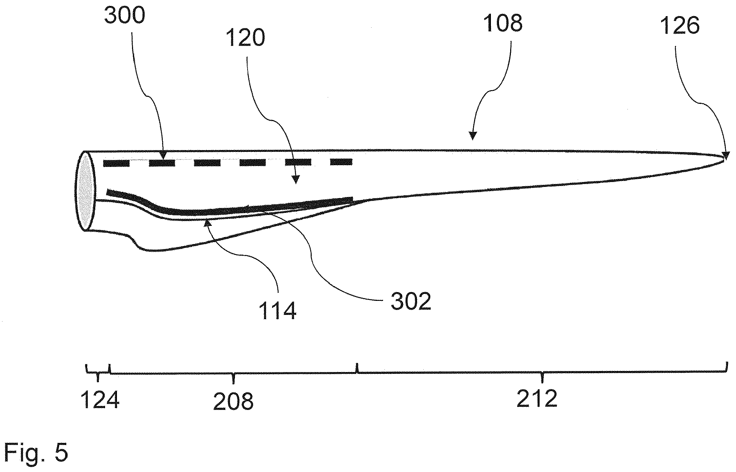

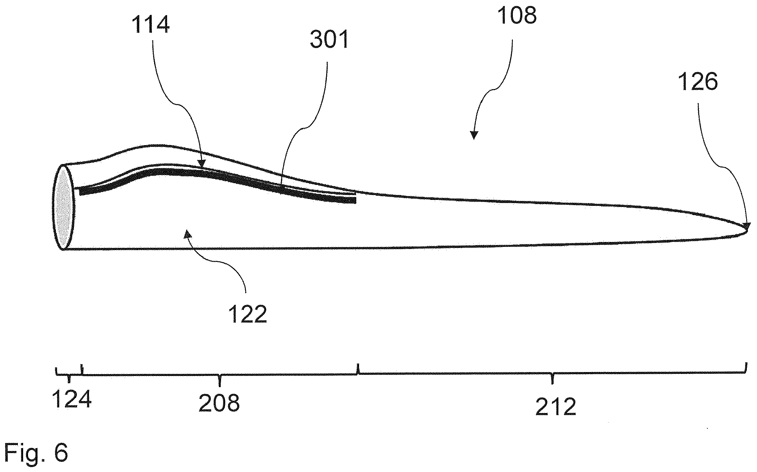

In den Figuren 5 und 6 ist jeweils ein Rotorblatt 108 gezeigt. Figur 5 zeigt eine Ansicht auf die Saugseite 120 und die in Figur 6 dargestellte Ansicht zeigt die Druckseite 122.

Die schematischen Darstellungen des Rotorblatts 108 in den Figuren 5 und 6 zeigen einen Wurzelbereich 124 an einem Ende des Rotorblatts 108 und an dem dazu abgewandten Ende eine Rotorblattspitze 126. Der Abstand zwischen der Rotorblattspitze 126 in dem Wurzelbereich 124 definiert die Rotorblattlänge. An dem Wurzelbereich 124 oder im Allgemeinen in dem Bereich nahe des Wurzelbereichs 124 weist das Rotorblatt 108 eine große Profiltiefe auf. An der Rotorblattspitze 126 ist die Profiltiefe dagegen kleiner. In den gezeigten Ausführungsformen nimmt die Profiltiefe ausgehend von dem Wurzelbereich 124 in Richtung des Blattinnenbereichs zunächst zu und bis zu einem mittleren Bereich des Rotorblatts 108 wieder deutlich ab. Vom mittleren Bereich bis zur Rotorblattspitze 126 ist die Profiltiefe nahezu konstant bzw. die Abnahme der Profiltiefe ist deutlich verringert. In dem hier gezeigten Beispiel erstreckt sich eine Position der Wirbelgeneratoren 300 und 302 in Figur 5 sowie 301 in Figur 6 in einem Bereich von dem mittleren Bereich zu dem Wurzelbereich 124. Dieser Bereich definiert in dem hier gezeigten Beispiel auch den stumpfen Abschnitt 208, der die stumpfe Hinterkante 114 aufweist.

Das Rotorblatt 108 kann hierbei eine Anzahl an Profilschnitten aufweisen, die den Profilverlauf des Rotorblatts 108 definieren. Insbesondere können in dem Bereich zwischen dem Wurzelbereich 124 und dem mittleren Bereich Profilschnitte gemäß einer der Figuren 2-4 angeordnet sein. Vorzugsweise können auch unterschiedlich ausgebildete Profilschnitte vorgesehen sein. Die weiter in Richtung der Blattspitze 126 liegenden Profilschnitte sind in den hier gezeigten Beispielen frei von einer stumpfen Hinterkante und definieren insbesondere einen Außenabschnitt 212 mit einem im Wesentlichen geschlossenen Profil. Durch die Anordnung unterschiedlich ausgestalteter Profilschnitte an verschiedenen Radiuspositionen des Rotorblatts 108 kann ein aerodynamisch optimaler Strömungsverlauf erzielt werden.

Figur 5 zeigt beispielhaft eine erste Position von Wirbelgeneratoren 300 sowie eine zweite Position von Wirbelgeneratoren 302 auf der Saugseite 120. Die erste Position 300 befindet sich hierbei in einem saugseitigen Vorderkantenbereich, der eine Erstreckung von kleiner 80 %, insbesondere kleiner 70 % der Profiltiefe aufweist. Die zweite Position 302 kann insbesondere in dem saugseitigen Hinterkantenbereich und/oder dem saugseitigen Nahbereich liegen. Der saugseitige Hinterkantenbereich weist hierbei eine Erstreckung von kleiner 30 %, insbesondere kleiner 20 % ausgehend von der stumpfen Hinterkante 114 in Richtung der Vorderkante auf. Der saugseitige Nahbereich weist eine Erstreckung kleiner gleich 10 % der Profiltiefe von der stumpfen Hinterkante 114 ausgehenden Richtung der Vorderkante auf.

Gemäß einer anderen bevorzugten Ausführungsform kann das Rotorblatt an der ersten Position 300 frei von Wirbelgeneratoren sein.

Die Druckseite des in Figur 5 gezeigten Rotorblatts (in Figur 5 nicht gezeigt) kann vorzugsweise frei von Wirbelgeneratoren sein oder entsprechend Figur 6 ausgebildet sein, sodass sowohl auf der Druckseite als auch auf der Saugseite Wirbelgeneratoren vorgesehen sind.

Figur 6 zeigt beispielhaft eine Position von Wirbelgeneratoren 301 auf der Druckseite 122. Diese Position 301 befindet sich hierbei in einem saugseitigen Vorderkantenbereich, der eine Erstreckung von kleiner 80 %, insbesondere kleiner 70 % der Profiltiefe aufweist.

In dem hier gezeigten Beispiel ist der Vorderkantenbereich, der eine Erstreckung von kleiner 80 %, insbesondere kleiner 70 % der Profiltiefe aufweist, frei von Wirbelgeneratoren. Alternativ kann eine weitere Position von Wirbelgeneratoren in dem druckseitigen Vorderkantenbereich vorgesehen sein.

### BEZUGSZEICHEN

- 100: Windenergieanlage
- 102: Turm
- 104: Gondel
- 106: Rotor
- 108: Rotorblatt
- 110: Spinner
- 112: Vorderkante
- 114: stumpfe Hinterkante
- 116: Gebiet der Nachlaufturbulenzen
- 118: Durchmischung
- 120: Saugseite
- 122: Druckseite
- 124: Wurzelbereich
- 126: Rotorblattspitze
- 128: Rundung
- 130: Hinterkantenhöhe
- 132: Profilschnitt
- 200: Wirbelgenerator
- 202: Vortexgenerator
- 204: Auskraglänge
- 206: saugseitiger Übergangsbereich
- 208: stumpfer Abschnitt
- 210: saugseitige Profilkontur
- 212: Außenabschnitt
- 300: Position von Wirbelgeneratoren
- 301: Position von Wirbelgeneratoren
- 302: Position von Wirbelgeneratoren

## Patentansprüche

1. Rotorblatt (108) für eine Windenergieanlage (100) mit
- einer sich zwischen einem Wurzelbereich (124) und einer Rotorblattspitze (126) einstellenden Rotorblattlänge, einer sich zwischen einer Vorderkante (112) und einer stumpfen Hinterkante (114) einstellenden Rotorblatttiefe, einer sich zwischen einer Druckseite (122) und einer Saugseite (120) einstellenden Rotorblattdicke,
- einem sich auf der Saugseite (120) erstreckenden, saugseitigen Hinterkantenbereich und/oder einem sich auf der Druckseite (122) erstreckenden, druckseitigen Hinterkantenbereich, wobei sich der saugseitige Hinterkantenbereich und/oder der druckseitige Hinterkantenbereich ausgehend von der stumpfen Hinterkante (114) in Richtung der Vorderkante (112) mit einer Erstreckung von kleiner 30 %, insbesondere kleiner 20 %, der Profiltiefe erstreckt, und
- wobei der saugseitige Hinterkantenbereich und/oder der druckseitige Hinterkantenbereich mindestens einen Wirbelgenerator (200) aufweist.

2. Rotorblatt (108) nach Anspruch 1, wobei der Wirbelgenerator (200) derart ausgebildet ist, dass der saugseitige Hinterkantenbereich und/oder der druckseitige Hinterkantenbereich eine inhomogene Geometrie aufweist, so dass sich an der stumpfen Hinterkante (114) ausbildende Wirbelgebiete unterbunden oder abgeschwächt werden.

3. Rotorblatt (108) nach einem der vorherigen Ansprüche, wobei der Wirbelgenerator (200) einen Vortexgenerator (202), insbesondere ein Paar an Vortexgeneratoren (202), aufweist,
wobei vorzugsweise der Vortexgenerator (202) von der stumpfen Hinterkante (114) auskragt,
wobei vorzugsweise der Vortexgenerator (202) als Vane-Vortexgenerator oder als Wishbone-Vortexgenerator oder als Corten Pro ausgebildet ist.

4. Rotorblatt (108) nach einem der vorherigen Ansprüche, wobei sich der Wirbelgenerator (200) mit einer im Wesentlichen parallel zur Rotorblattdicke ausgerichteten Auskraglänge (204) über einer Rotorblattoberfläche erstreckt, wobei
- mindestens ein den Wirbelgenerator (200) aufweisender Profilschnitt (132), vorzugsweise zwei oder mehr oder alle Profilschnitte (132) mit einem Wirbelgenerator (200), des Rotorblatts (108) eine Hinterkantenhöhe (130) der stumpfen Hinterkante (114) aufweist bzw. aufweisen, wobei die Auskraglänge (204) kleiner gleich 50 % der Hinterkantenhöhe (130) beträgt, und/oder
- mindestens ein den Wirbelgenerator (200) aufweisender Profilschnitt (132), vorzugsweise zwei oder mehr oder alle Profilschnitte (132) mit einem Wirbelgenerator (200), des Rotorblatts (108) eine sich im Betrieb einstellende Grenzschicht mit einer Grenzschichthöhe aufweist, wobei die Auskraglänge (204) mehr als 20 % der Grenzschichthöhe beträgt.

5. Rotorblatt (108) nach einem der vorherigen Ansprüche, wobei
- die stumpfe Hinterkante (114) zumindest eines Profilschnitts (132) gerade ausgebildet ist und sich im Wesentlichen parallel zur Ausrichtung der Rotorblattdicke erstreckt, und/oder
- eine oder die Hinterkantenhöhe (130) der stumpfen Hinterkante (114) mindestens eines Profilschnitts (132) mehr als 50 %, insbesondere mehr als 60 %, der Rotorblattdicke beträgt.

6. Rotorblatt (108) nach einem der vorherigen Ansprüche, wobei
- das Rotorblatt (108) zwischen dem Wurzelbereich (124) mit einem im Wesentlichen runden Querschnitt und einem Außenabschnitt (212) mit einem im Wesentlichen geschlossenen Profil einen stumpfen Abschnitt (208) umfasst, der die stumpfe Hinterkante (114) aufweist, wobei sich der stumpfe Abschnitt (208) bis hin zu einer relativen Rotorblattlänge von größer 30 %, vorzugsweise größer 40 %, insbesondere größer 50 %, erstreckt.

7. Rotorblatt (108) nach einem der vorherigen Ansprüche, wobei für zumindest einen Profilschnitt (132) der saugseitige Hinterkantenbereich einen saugseitigen Übergangsbereich (206) angrenzend an die stumpfe Hinterkante (114) und/oder der druckseitige Hinterkantenbereich einen druckseitigen Übergangsbereich angrenzend an die stumpfe Hinterkante (114) aufweist, wobei der saugseitige Übergangsbereich (206) zwischen einer saugseitigen Profilkontur (210) und der stumpfen Hinterkante (114) angeordnet ist und/oder der druckseitige Übergangsbereich zwischen einer druckseitigen Profilkontur und der stumpfen Hinterkante (114) angeordnet ist, wobei vorzugsweise der saugseitige Übergangsbereich (206) und/oder der druckseitige Übergangsbereich einen Radius aufweisen.

8. Rotorblatt (108) nach dem vorherigen Anspruch 7, wobei der mindestens eine Wirbelgenerator (200) im saugseitigen Übergangsbereich (206) und/oder im druckseitigen Übergangsbereich angeordnet ist.

9. Rotorblatt (108) nach einem der vorherigen Ansprüche, wobei der mindestens eine Wirbelgenerator (200) in einem saugseitigen Nahbereich und/oder einem druckseitigen Nahbereich angrenzend an die stumpfe Hinterkante (114) angeordnet ist, wobei sich der saugseitige Nahbereich und/oder der druckseitige Nahbereich mit kleiner gleich 10 % der Profiltiefe von der stumpfen Hinterkante (114) ausgehend in Richtung der Vorderkante (112) erstreckt, wobei vorzugsweise der saugseitige Nahbereich den saugseitigen Übergangsbereich (206) und/oder der druckseitige Nahbereich den druckseitigen Übergangsbereich umfasst.

10. Rotorblatt (108) nach einem der vorherigen Ansprüche,
- umfassend einen sich auf der Saugseite (120) erstreckenden, saugseitigen Vorderkantenbereich und/oder einen sich auf der Druckseite (122) erstreckenden, druckseitigen Vorderkantenbereich, wobei sich der saugseitige Vorderkantenbereich und/oder der druckseitige Vorderkantenbereich ausgehend von der Vorderkante (112) in Richtung der stumpfen Hinterkante (114) mit einer Erstreckung von kleiner 80 %, insbesondere kleiner 70 %, der Profiltiefe erstreckt, wobei der saugseitige Vorderkantenbereich und/oder der druckseitige Vorderkantenbereich mindestens einen weiteren Wirbelgenerator aufweist, und/oder
- umfassend einen den Wurzelbereich (124) aufweisenden Strukturabschnitt mit einem im Wesentlichen kreisrunden Profilschnitt (132), wobei in dem Strukturabschnitt mindestens ein weiterer Wirbelgenerator (200) angeordnet ist.

11. Rotorblatt (108) nach einem der vorherigen Ansprüche, umfassend mindestens zwei Wirbelgeneratoren (200), zwischen denen in Richtung der Rotorblattlänge ein Abstand besteht, wobei dieser Abstand mindestens eine 1-fache bis maximal eine 100-fache, vorzugsweise mindestens eine 1-fache bis maximal eine 70-fache, weiter vorzugsweise mindestens eine 2-fache bis maximal eine 50-fache, weiter vorzugsweise mindestens eine 2-fache bis maximal eine 40-fache, weiter vorzugsweise mindestens eine 3-fache bis maximal eine 30-fache, weiter vorzugsweise mindestens eine 4-fache bis maximal eine 20-fache, weiter vorzugsweise mindestens eine 5-fache bis maximal eine 15-fache, Auskraglänge (204) der mindestens zwei Wirbelgeneratoren (200) beträgt.

12. Rotorblatt (108) nach einem der vorherigen Ansprüche, umfassend mehrere Wirbelgeneratoren (200),
- wobei zwischen den mehreren Wirbelgeneratoren (200) in Richtung der Rotorblattlänge ein Abstand besteht, wobei der Abstand geringer wird je weiter die Wirbelgeneratoren (200) von dem Wurzelbereich (124) beabstandet sind, und/oder
- wobei eine Auskraglänge (204) der mehreren Wirbelgeneratoren (200) mit größerer Beabstandung vom Wurzelbereich (124) geringer wird, wobei vorzugsweise die Auskraglänge (204) der mehreren Wirbelgeneratoren (200) diskontinuierlich geringer wird und ferner vorzugsweise zwei oder drei unterschiedliche Auskraglängen (204) vorgesehen sind.

13. Rotor (106) für eine Windenergieanlage (100), umfassend mindestens ein Rotorblatt (108) nach einem der vorherigen Ansprüche 1-12.

14. Bauwerk, insbesondere Turm (102), vorzugsweise für eine Windenergieanlage (100), umfassend
- eine statische Einheit, insbesondere eine Turmwand, wobei die statische Einheit mindestens einen Wirbelgenerator (200) aufweist.

15. Windenergieanlage (100), umfassend
- einen Rotor (106) nach Anspruch 13, und/oder
- ein Bauwerk nach Anspruch 14.
